# EUROPÄISCHE PATENTSCHRIFT

(11) **EP 2 519 807 B1**
(45) Veröffentlichungstag und Bekanntmachung des Hinweises auf die Patenterteilung: **01.03.2017**
(21) Anmeldenummer: 10787728.4
(22) Anmeldetag: 29.11.2010
(51) Int. Cl.: G01F 23/24, G01F 23/296, G01F 25/00, G01F 23/26

(54) **EINRICHTUNG ZUM ERKENNEN EINES PEGELSTANDS**
DEVICE FOR DETECTOMG A LEVEL
DISPOSITIF SERVANT À DÉTECTER UN NIVEAU

(30) Priorität: 30.12.2009 DE 102009060742
(43) Veröffentlichungstag der Anmeldung: 07.11.2012
(73) Patentinhaber: Negele Messtechnik GmbH, 87743 Egg a. d. Günz (DE)
(72) Erfinder: FEND, Peter, 87700 Memmingen (DE); MARTENS, Alexander, 87700 Memmingen (DE); STEINLE, Erwin, 87763 Lautrach (DE)
(74) Vertreter: Hoppe, Lars
(86) Internationale Anmeldenummer: PCT/EP2010/068387
(87) Internationale Veröffentlichungsnummer: WO 2011/080018

(56) Entgegenhaltungen:
- WO-A1-98/17981
- DE-A1- 19 713 267
- JP-A- 59 136 622
- US-A- 4 674 329
- US-A- 4 807 471
- US-A- 5 602 333
- US-A1- 2004 112 127
- US-A1- 2009 064 757

## Beschreibung

Die vorliegende Erfindung betrifft ein Verfahren zum Betreiben einer Einrichtung zum Erkennen eines Pegelstands von Medien, vorzugsweise in einem Tank, mit einem im Wesentlichen vertikal in den Tank hineinragend, von diesem elektrisch isoliert anbringbaren länglichen elektrischen Sondenleiter, einem elektrischen zeitlich variablen Generator mit einer Innenimpedanz (Zg) zum Anschließen an einen Speisepunkt des Sondenleiters, um an diesen eine zeitlich variable Spannung anzulegen, wobei der Speisepunkt an einem, vorzugsweise am tankseitigen, Ende des Sondenleiters angeordnet ist, und einer Auswerte- und/oder Steuereinheit zum Auswerten einer elektrischen Größe des Sondenleiters.

Gattungsgemäße Einrichtungen sowie Verfahren zum Betreiben derselben sind in verschiedenen Ausführungen bekannt. Die bekannten Einrichtungen und Verfahren basieren beispielsweise bei konduktiven Verfahren auf der Auswertung des elektrischen Leitwerts. Andererseits basiert bei bekannten kapazitiven Einrichtungen und Verfahren die Messung auf der Auswertung einer elektrischen Kapazität.

Nachteilig bei den bekannten Verfahren ist insbesondere die Abhängigkeit von Eigenschaften des Mediums, dessen Pegelstand gemessen werden soll. Insbesondere ist bei den bekannten Verfahren die relative Dielektrizität bzw. der spezifische elektrische Leitwert bei der Auswertung zu berücksichtigen. Außerdem sind einige der vorbekannten Messeinrichtungen mit Nachteil nur für elektrisch leitende Medien geeignet. Ferner sind die bekannten Messeinrichtungen mit Nachteil anfällig gegen störende Einflüsse wie Schaumbildung und Anhaftungen. Daher ist in der Regel eine Empfindlichkeitseinstellung im Sinne einer Anpassung an das zu detektierende Medium notwendig. Dies ist bei den bekannten Einrichtungen häufig schwierig oder gar unmöglich, wenn verschiedene Medien in derselben Applikation nacheinander zum Einsatz kommen. Zwar wurden bei dem bekannten konduktiven Verfahren versucht, durch eine Teilisolierung vom oberen Bereich die wirksame Elektrodenfläche bei aufsteigendem Schaum konstant zu halten, indem die Wegstrecke von leitenden Brückenbildungen bei anhaftenden Medien verlängert wird. Eine isolierende Beschichtung erhöht jedoch mit Nachteil die Kosten.

Aus den Schriften DE7933089U1, DE8018675U1 sowie DE102005025576A1 sind verschiedene Ausgestaltungen von kapazitiven Messsonden für die Füllstandsmessung vorbekannt. Bei kapazitiven Messsonden besteht ebenfalls das Problem, dass diese bei Schaumbildung häufig versagen. Zudem erhöht auch bei diesen Sonden eine isolierende Beschichtung mit Nachteil die Herstellungskosten und bedingt Probleme durch Diffusionseffekte, insbesondere bei Anwendungen mit hohen Temperaturen.

Desweiteren sind Laufzeit-Verfahren, wie zum Beispiel Impuls-Laufzeit-Messung, Time-Domain-Reflection (TDR), geführtes Radar-EchoVerfahren, bekannt, welche zwar nicht zwangsläufig eine elektrische Isolierung des Sondenleiters benötigen, jedoch nachteilig bezüglich des relativ hohen Aufwands bei der Auslegung der Ansteuer- und Auswerte-Schaltungen für einen sehr hohen Frequenzbereich sind.

Aus der US 5 602 333 A ist ein Verfahren zum Betreiben einer Einrichtung mit den Merkmalen des Oberbegriffes von Anspruch 1 bekannt, bei dem Amplitudenmaxima verwendet werden.

Vor diesem Hintergrund liegt der vorliegenden Erfindung die Aufgabe zugrunde, ein Verfahren zum Betreiben einer Einrichtung der eingangs genannten Art anzugeben, welche einen Pegelstand von beliebigen Medien, insbesondere flüssigen, pastösen und/oder granulierten festen Medien, möglichst einfach, fehlertolerant und kostengünstig erfassen kann.

Die Einrichtung zur Erkennung eines Pegelstands weist eine Auswerte- und/oder Steuereinheit zur Messung einer Fußpunktimpedanz des Sondenleiters am Speisepunkt auf. Dabei kann die Spannung einerseits am tankseitigen Ende des Sondenleiters angelegt werden. Dies ist zweckmäßig, sofern der Sondenleiter von oben in den Tank hineinragt. Bei bestimmten Auslegungen kann bei diesem Aufbau bei Unterschreiten eines bestimmten Pegels der Sondenleiter nicht in Berührung mit dem Medium stehen. Alternativ kann die Spannung auch an das Ende des Sondenleiters, welches in den Tank hineinragt, angelegt werden. Dies ist zweckmäßig, wenn der Sondenleiter von unten in den Tank hineinragt, sodass mit zunehmendem Füllpegel ein abnehmender Längenabschnitt über das Medium hinausragt. Die Beschaltung und Auswertung der Einrichtung erfolgt bei dieser Konfiguration jeweils komplementär zu der Ausführung, bei welcher der Sondenleiter von oben in den Tank hineinragt.

Es ist vorgesehen, dass der Generator einen elektrischen Oszillator umfasst, um an den Speisepunkt eine Wechselspannung mit einer vorgebbaren Frequenz anzulegen. Es lassen sich auf diese Weise Resonanzphänomene durch Messung der Fußpunktimpedanz ermitteln, welche gemäß experimentellem Befund davon beeinflusst sind, ob und ggf. wie tief die Messsonde in das Medium eintaucht.

Es ist vorgesehen, dass der Oszillator zur Erzeugung einer Wechselspannung mit einer Resonanzfrequenz des aus dem Sondenleiter, dem Oszillator und dem Tank und/oder dem Gegenleiter gebildeten Schaltkreises ausgebildet ist, wobei die Auswerte- und/oder Steuereinheit zur Messung einer Fußpunktimpedanz des Sondenleiters am Speisepunkt ausgebildet ist. Die beobachtete Abhängig der Fußpunktimpedanz vom Eintauchzustand der Sonde ist bei dieser Frequenz besonders ausgeprägt.

Insbesondere kann der Oszillator zur Erzeugung einer Wechselspannung mit einer λ/4-Frequenz ausgebildet sein, welche im Wesentlichen einer Wellenlänge mit der vierfachen Längenausdehnung des Sondenleiters entspricht. Bezüglich dieser Frequenz wurde beobachtet, dass deren Amplitude sich beim Eintauchen der Sonde in das Medium sprunghaft verändert.

Der Oszillator kann zur Erzeugung einer Wechselspannung mit einer Lambdaviertelfrequenz ausgebildet sein, welche im Wesentlichen einer Wellenlänge mit der vierfachen Längenausdehnung des Sondenleiters entspricht, wobei die Auswerte- und/oder Steuereinheit zur Messung einer Fußpunktimpedanz des Sondenleiters am Speisepunkt ausgebildet ist. Dieser Aufbau ermöglicht es mit Vorteil, das Eintauchen des Sondenleiters in das Medium zuverlässig und fehlertolerant, insbesondere unabhängig von dem Medium, zu ermitteln aufgrund einer starken Verschiebung der Resonanzfrequenz des aus dem Sondenleiter und einem Gegengewicht gebildeten Schaltkreises, welche beim Eintauchen des dem Speisepunkt gegenüberliegenden Endes des Sondenleiters zu beobachten ist. Eine schwellwertige Auswertung der Resonanzamplitude bei einem Viertel der Wellenlänge innerhalb eines Bewertungsfensters in Frequenz- und Amplitudenachse durch Auswertung der Fußpunktimpedanz lässt so eine sichere Bestimmung des Zustandes "nicht eingetaucht" bzw. "eingetaucht" zu. Beim Berühren des dem Speisepunkt gegenüberliegenden Endes des Sondenleiters mit dem Medium steigt die Fußpunktimpedanz bei der Lambdaviertelfrequenz innerhalb des Bewertungsfensters so stark an, dass der Impedanzwert bei geeigneter Wahl des Bewertungsfensters außerhalb dieses Bewertungsfensters liegt. Mit diesen Einrichtungen lässt sich daher mit Vorteil insbesondere eine zuverlässige Bestimmung durchführen, ob ein Pegelstand eines Mediums einen bestimmten Wert erreicht oder nicht. Da die Bestimmung des Grenzstandes nur auf Basis der Frequenzlage der Minimalstelle in einem relativ großen Bewertungsfenster erfolgt, ist erfindungsgemäß mit Vorteil einer Detektion praktisch für alle technisch verwendeten Medien ohne eine angepasste Einstellung eines Schwellwerts an das Medium mit großer Sicherheitsreserve möglich. Es wurde beobachtet, dass die sprunghafte Veränderung der Resonanzfrequenz beim Berühren des dem Speisepunkt gegenüberliegenden Endes des Sondenleiters mit dem Medium weitgehend unabhängig von den Eigenschaften des Mediums auftritt. Ebenfalls wurde beobachtet, dass die Schwellwertauswertung mit Vorteil unkritisch gegenüber Toleranzen und Driften in der Auswerteelektronik vorhandener Bauelementen ist. Ebenfalls wurde beobachtet, dass eine Verfälschung der mit der Einrichtung vorgenommenen Pegelmessung durch Schaumbildung nicht auftritt. Auch brückenbildende Anhaftungen, insbesondere von pastösen Medien, zwischen dem tankseitigen Speisepunkt des Sondenleiters und z. B. der Tank-Wandung haben ebenfalls mit Vorteil die Pegelstandsmessung nicht verfälscht. Die beobachteten Vorteile der Einrichtung lassen sich möglicherweise mit der Theorie eines Viertelwellendipols, als welcher der elektrische Sondenleiter fungiert, erklären. Beim Berühren des elektrischen Sondenleiters mit dem Medium kommt gemäß dieser Theorie eine sog. Dachkapazität an der Grenzfläche zwischen Luft und dem zu detektierenden Medium zu dem Schaltkreis hinzu, welche die beobachtete Frequenzverschiebung bewirkt.

Wenn der Oszillator zusätzlich zum elektrischen Anschließen an den Tank ausgebildet ist, kann mit Vorteil der Tank die Funktion des Gegenpols, genannt Gegengewicht, übernehmen, an dem sich der Sondenleiter elektrisch spiegelt. Der aus dem Sondenleiter und dem Tank gebildete Schaltkreis entspricht dann einem Halbwellendipol. Voraussetzung für diese Ausführung ist naturgemäß, dass der Tank elektrisch leitend ist.

Wenn der Generator gemäß einer anderen vorteilhaften Ausgestaltung einen Pulsgenerator zur Erzeugung von Steuerpulsen umfasst, wobei die Auswerte- und/oder Steuereinheit zur frequenzaufgelösten Messung der Fußpunktimpedanz des Sondenleiters am Speisepunkt ausgebildet ist, lässt sich die Einrichtung in einem Burstbetrieb betreiben. Dabei werden sogenannte Bursts, also Wellenpakete mit vorgegebener Schwingungsfrequenz erzeugt, indem der Pulsgenerator zum An- und Ausschalten eines Oszillators mittels Steuerpulsen betrieben wird. Zweckmäßig ist es, wenn die Schwingungsfrequenz innerhalb der Bursts jeweils unterschiedlich ist. Es kann dann mit jedem Burst eine Auswertung der Impedanz erfolgen, um so das Frequenzspektrum der Messanordnung in diskreten Frequenzschritten abzutasten. Die bei diesem Verfahren für die Auswertung erforderliche Abtastrate kann mit Vorteil niedrig gewählt sein, da sich innerhalb jedes Bursts ein quasi-stationärer Zustand einstellt. Dadurch, dass gemäß dieser Variante der Erfindung nicht kontinuierlich eine hochfrequente Spannung an dem System anliegt sondern nur innerhalb der Bursts, kann die Einrichtung mit Vorteil EMV-verträglich betrieben werden. Außerdem ergeben sich Vorteile hinsichtlich des Energieverbrauchs der Einrichtung.

Eine andere Auswertung des Füllstands ist mit einer anderen vorteilhaften Ausgestaltung möglich, bei welcher der Generator einen Pulsgenerator zur Erzeugung von Anregungspulsen umfasst, wobei die Anregungspulse mindestens eine innerhalb eines der Größenordnung des Kehrwertes einer größten auszuwertenden Frequenz entsprechenden Zeitintervalls auf einen Maximalwert ansteigende Flanke aufweisen. Mit dieser Anordnung läßt sich eine Sprungantwort des Systems ermitteln und auswerten. Beispielsweise kann eine schnelle Fouriertransformation (FFT) durchgeführt werden, um das Frequenzspektrum der Sprungantwort auszuwerten. Um die für die Auswertung einer Sprungantwort benötigten Abtastraten bei der Signalaufnahme herabzusetzen, kann die Auswertung auch nach dem sogenannten Sampling-Verfahren vorgenommen werden. Dies ist dem zuständigen Fachmann beispielsweise aus der Betriebsweise von Sampling-Oszilloskopen bekannt. Dazu wird zur Auswertung ein sogenanntes "Undersampling", also ein Abtasten mit geringerer Frequenz als der zu messenden Frequenz, durchgeführt, indem der Zeitpunkt des Abtastens bei jeder Puls-Periode geringfügig verschoben wird.

In anderer vorteilhafter Ausgestaltung ist vorgesehen, dass zusätzlich zu dem Sondenleiter ein elektrischer Gegenleiter zur Bildung eines elektrischen Gegenpols vorgesehen ist, wobei der Oszillator zusätzlich zum elektrischen Anschließen an den Gegenleiter ausgebildet ist. Gemäß dieser vorteilhaften Variante lässt sich die Messeinrichtung auch zur Bestimmung von Pegelständen in Tanks aus einem nicht leitenden Material verwenden. Der elektrische Gegenleiter fungiert dann als Gegenpol/Gegengewicht, an dem sich der Sondenleiter elektrisch spiegelt, um insgesamt einen Halbwellendipol nachzustellen. Neben der Anwendung der Einrichtung in nicht leitfähigen Tanks ermöglicht diese Ausgestaltung mit Vorteil sogar die Verwendung der Messeinrichtung im freien Feld.

In spezieller Ausgestaltung ist der Gegenleiter innerhalb des Tanks, vorzugsweise parallel zu dem Sondenleiter, anordenbar ausgestaltet. Die räumliche Unterbringung des Gegenleiters bereitet auf diese Weise mit Vorteil keine Probleme.

Wenn der Gegenleiter im Wesentlichen gleichartig wie der Sondenleiter ausgestaltet ist, kann bei geeigneter Anordnung des Gegenleiters relativ zu dem Sondenleiter erfindungsgemäß das Verhalten einer Lecherleitung gesehen werden.

Insbesondere kann in bevorzugter Ausgestaltung der Gegenleiter als offene Bandleitung ausgestaltet sein und somit als Wellenleiter wirken.

Der Sondenleiter kann in bevorzugter Ausgestaltung stabartig und/oder als Seil ausgeformt sein. Beispielsweise können bereits in einem Tank vorhandene mechanische Bauelemente verwendet werden, um in Kombination mit den übrigen Merkmalen der Einrichtung zusammenzuwirken. Insbesondere lässt sich beispielsweise das aus der DE 272 3 999 C2 für die potentiometrische Messanordnung verwendete co-axiale Sondenrohr als Sondenleiter der Einrichtung verwenden. Die Ausgestaltung des Sondenleiters als Stab und/oder als Seil ermöglichlicht zudem eine einfache Anpassung der Länge zur Variierung des zu erkennenden Grenz-Pegelstands.

In weiterer vorteilhafter Ausgestaltung ist vorgesehen, dass zwischen die Auswerte- und/oder Steuereinheit und einen aus dem Sondenleiter, dem Oszillator und dem Tank und/oder dem Gegenleiter gebildeten Schaltkreis eine variable Impedanz geschaltet ist. Diese variable Impedanz ermöglicht mit Vorteil die Anpassung der Messeinrichtung an unterschiedliche Messbedingungen hinsichtlich Länge des Sondenleiters, Oszillatorfrequenz sowie des verwendeten Auswerte- und/oder Steuergeräts. Die variable Impedanz dient dazu, die Tiefe der für die Auswertung wichtigen Resonanzstellen, insbesondere der Resonanzminima, zur Erleichterung der Auswertung im Sinne einer Kontrastverstärkung zu erhöhen. Dies kann, wie dem Fachmann bekannt, beispielsweise durch die Wahl einer hochohmigen Impedanz mit Kombination eines nachfolgenden Verstärkers mit entsprechend hohem Verstärkungsfaktor erreicht werden.

Eine besonders vielseitig einsetzbare Ausgestaltung der Einrichtung sieht Mittel zum gepulsten Ansteuern des Oszillators und/oder zum, vorzugsweise kontinuierlichen, Variieren der Frequenz innerhalb eines Frequenzintervalls vor, wobei der Oszillator vorzugsweise zum Erzeugen von Frequenzen in einem Bereich um den dreifachen und/oder fünffachen Wert der Lambdaviertelfrequenz und/oder den zweifachen und/oder den vierfachen Wert der λ/4-Frequenz ausgestaltet ist. Sowohl die gepulste Ansteuerung als auch eine kontinuierliche Variierung der Frequenz im Sinne eines Frequenz-Sweeps ermöglichen mit Vorteil die Aufnahme eines Frequenzspektrums, also der Fußpunktimpedanz als Funktion der Oszillatorfrequenz. Anhand einer Auswertung des Frequenzspektrums im Bereich der Frequenzen bei 3/4 und 5/4 der Wellenlänge lässt sich erfindungsgemäß mit Vorteil zusätzlich zu der oben beschriebenen Verwendung der Einrichtung als Grenzstandwächter eine kontinuierliche Bestimmung des Pegelstands durchführen. Dazu nutzt man die experimentell beobachtete Verschiebung der Impedanzminima hin zu höheren Frequenzen mit zunehmender Eintauchtiefe in das Medium aus. Als mögliche Erklärung für dieses experimentell beobachtete Verhalten könnte eine Verkürzung der Schwingungslänge des außerhalb des Mediums befindlichen Abschnitts des Sondenleiters in Betracht kommen.

Analog kann im Rahmen der Erfindung auch eine Auswertung der Messwerte bei geradzahligen Vielfachen der λ/4 Frequenz vorgenommen werden, entsprechend einer Auswertung an den Maximalstellen der Fußpunktimpedanz.

Um die für die Auswertung der Resonanzspektren erforderlichen Abtastraten herabzusetzen und damit die Kosten für die entsprechenden Bauteile niedrig zu halten, kann im Rahmen der Erfindung die Auswertung auch nach dem sogenannten Sampling-Verfahren vorgenommen werden, wie dem zuständigen Fachmann beispielsweise aus der Betriebsweise von Sampling-Oszilloskopen bekannt, wird dann zur Auswertung ein sogenanntes "Undersampling", also ein Abtasten mit geringerer Frequenz als der zu messenden Frequenz, durchgeführt, indem der Zeitpunkt des Abtastens bei jeder Puls-Periode geringfügig verschoben wird. Diese Betriebsweise beruht also im Prinzip darauf, dass in der Steuereinheit zwei Oszillatoren mit geringfügig unterschiedlicher, aber jeweils konstanter Frequenz vorhanden sind, wobei aus dem einen Oszillator durch entsprechende Frequenz-Teilung die Anregungs-Pulse und aus dem anderen Oszillator entsprechend die Abtast-Pulse gewonnen werden.. Diese Form der Auswertung ist dem Fachmann für sich genommen im Übrigen bekannt.

Die auf ein Verfahren zum Betreiben einer Einrichtung nach einem der Ansprüche 1 bis 6 gerichtete Aufgabe, die der vorliegenden Erfindung zugrunde liegt, wird durch die kennzeichnenden Merkmale von Anspruch 1 gelöst. Insbesondere erlaubt die Messung der Schwingungsamplitude bei genannter Viertelfrequenz die Nutzung des Verfahrens als Grenzstandwächter, da experimentell beobachtet wurde, dass die Impedanz bei Berührung des dem Speisepunkt gegenüberliegenden Endes des Sondenleiters deutlich höher ist als wenn der Sondenleiter das Medium nicht berührt. Auch kann gemäß dem erfindungsgemäßen Verfahren die Messung der Schwingungsamplitude bei einer Frequenz, welche dem Dreifachen und/oder dem Fünffachen der Lambdaviertelfrequenz entspricht, gemessen werden, um Änderungen im Füllpegel zu bestimmen, denn es wurde experimentell beobachtet, dass bei den zuletzt genannten Frequenzen Veränderungen des Füllpegels zu Veränderungen der Fußpunktimpedanz führen.

Insbesondere kann das erfindungsgemäße Verfahren die Schwingungsamplitude bei einer Referenzfrequenz messen, wobei bei Überschreiten eines vorgewählten Schwellwerts der Schwingungsamplitute ein Signal erzeugt wird. Beispielsweise kann als Referenzfrequenz die Lambdaviertelfrequenz verwendet werden, welche gemäß experimentellem Befund bei Berührung des dem Speisepunkt gegenüberliegenden Endes des Sondenleiters mit dem Medium kleiner ist, als wenn der Sondenleiter das Medium nicht berührt. Es genügt also gemäß der Erfindung, wenn ein verhältnismäßig schmalbandiges Frequenzfenster ausgewertet wird, wobei bei der Auswertung lediglich das Überschreiten bzw. Unterschreiten eines Schwellwerts festgestellt wird.

Wenn in spezieller Ausgestaltung des erfindungsgemäßen Verfahrens die Referenzfrequenz die Lambdaviertelfrequenz und/oder ein ungerades ganzzahliges Vielfaches der Lambdaviertelfrequenz ist, dient das erfindungsgemäße Verfahren zur Verwendung der erfindungsgemäßen Einrichtung als Grenzstandwächter, wobei gleichzeitig Änderungen in der Schwingungsamplitude beispielsweise beim Dreifachen der Lambdaviertelfrequenz und/oder beim Fünffachen der Lambdaviertelfrequenz zur Detektion unterschiedlicher Pegelstände bei in das Medium eingetauchtem Sondenleiter feststellbar sind.

Das Verfahren zum Betreiben der Einrichtung sieht vor, dass der Oszillator nacheinander bei unterschiedlichen Frequenzen betrieben wird, wobei die Schwingungsamplitude gemessen und aufgezeichnet wird, und dass in dem derart ausgesendeten Frequenzspektrum die Frequenzlage mindestens eines Amplitudenminimums bestimmt wird. Beispielsweise kann ein Frequenz-Sweep durchgeführt werden, bei welchem der Oszillator, im günstigsten Fall kontinuierlich, Frequenzen von unterhalb der Lambdaviertelfrequenz bis hin zu Werten im Bereich des Fünffachen der Lambdaviertelfrequenz betrieben wird bei gleichzeitiger Aufzeichnung der entsprechenden Impedanzwerte.

Mit Hilfe der Auswerte- und Steuereinheit lässt sich erfindungsgemäß anhand des aufgezeichneten Spektrums durch Auswertung innerhalb eines Bewertungsfensters, welches in der Frequenzachse in einem Bereich um die einer Lambdaviertelfrequenz angesiedelt ist und in der Amplitudenachse einen Bereich um einen vorgewählten Schwellwert herum erfasst, eine Grenzstandwächterfunktion erfüllen. Darüber hinaus können für den Fall des Auslaufens des Signals aus dem Bewertungsfenster für die Grenzstandsüberwachung als Hinweis für das Eintauchen des Sondenleiters darüber hinaus Frequenzen, insbesondere Minimalstellen im Bereich des Dreifachen und/oder Fünffachen einer Viertelfrequenz ausgewertet werden, deren Amplituden mit Veränderungen des Zustands gemäß experimenteller Beobachtung variieren. Außerdem wurde experimentell beobachtet, dass die Amplitudenminima sich in Abhängigkeit von der Eintauchtiefe des Sondenleiters auf der Frequenzachse verschieben. Dabei führt eine Vergrößerung der Eintauchtiefe zu einer Verschiebung der Minima, also der Resonanzfrequenzen, zu höheren Frequenzen und umgekehrt. Die Auswertung der Lagen der Amplitudenminima dient daher erfindungsgemäß ebenfalls als Maß für die Pegelhöhe, sofern durch ein Auslaufen des Signals außerhalb des Bewertungsfensters feststeht, dass der Sondenleiter das Medium berührt oder in dieses eingetaucht ist.

Wenn mittels des Generators Steuerpulse erzeugt werden, lässt sich erfindungsgemäß das oben beschriebene Verfahren zur Erzeugung von Bursts mit jeweils unterschiedlicher Schwingungsfrequenz durchführen. Dazu wird vorzugsweise die Frequenz bei jedem Burst entsprechend verändert. Durch dieses Verfahren lassen sich erfindungsgemäß die erforderlichen Hochfrequenzabstrahlungs-EMV-Grenzwerte durch Reduktion der Leistung mit Vorteil besonders einfach einhalten. Dies wirkt sich zusätzlich vorteilhaft durch einen reduzierten Energiebedarf der Ansteuer-Einheit aus.

Gemäß einer anderen vorteilhaften Ausgestaltung des erfindungsgemäßen Verfahrens werden mittels des Generators Anregungspulse erzeugt, wobei die Anregungspulse mindestens eine innerhalb eines der Größenordnung des Kehrwertes einer größten auszuwertenden Frequenz entsprechenden Zeitintervalls auf einen Maximalwert ansteigende Flanke aufweisen. Aufgrund der bekannten Phänomene der Wellenmechanik lassen sich hierdurch ebenfalls Frequenzspektren auswerten. Dazu kann, um die erforderliche Abtastrate zu verringern, das oben beschriebene sogenannte Sampling-Verfahren angewendet werden.

Gemäß des erfindungsgemäßen Verfahrens wird die Frequenzlage mindestens eines Amplitudenminimums zur Bestimmung des Pegelstands verwendet. Erfindungsgemäß wird somit mit Vorteil das experimentell beobachtete Phänomen ausgenutzt, wonach sich die Lage der Amplitudenminima insbesondere im Bereich des Dreifachen und/oder Fünffachen der einer Lambdaviertelfrequenz mit steigender Eintauchtiefe, entsprechend abnehmender nicht eingetauchter Länge des Sondenleiters, ab einer Mindesteintauchtiefe des Sondenleiters in das Medium zu höheren Frequenzen verschiebt.

Gemäß des erfindungsgemäßen Verfahrens zum Betreiben der Einrichtung wird die Güte mindestens eines Amplitudenminimums bestimmt, um zur Ermittlung des Pegelstandes eine Bestimmung einer zugehörigen Resonanzordnung durchzuführen. Experimentell wurde beobachtet, dass bei bestimmten Konstellationen ein Überlapp unterschiedlicher Frequenzspektren auftritt dergestalt, dass beispielsweise ein zu höheren Frequenzen verschobenes Amplitudenminimum mit einem wenig oder gar nicht frequenzverschobenen Amplitudenminimum höherer Ordnung zusammenfällt. Dies könnte bei der Auswertung dazu führen, dass ein ermitteltes Amplitudenminimum fälschlich als aufgrund des Eintauchens des Sondenleiters in das Medium verschobenes Amplitudenminimum entsprechend einer Lambda-Dreiviertelresonanz interpretiert wird, obwohl es sich tatsächlich um ein Lambda-Fünfviertelresonanzminimum aufgrund einer geringeren Eintauchtiefe handelt, da experimentell beobachtet wurde, dass die Güte, also das Verhältnis zwischen der Frequenz bei dem Minimum zu der Frequenzbreite dieses Minimums, sich je nach der Resonanzordnung verändert. Dementsprechend dient die erfindungsgemäß vorgeschlagene Auswertung der Güte hier als zusätzliches Unterscheidungskriterium.

Im Rahmen des erfindungsgemäßen Verfahrens kann ein Auffinden einer Lambda-Dreiviertelresonanz auch wie folgt vorgenommen werden: Zunächst wird festgestellt, ob bei der Referenzfrequenz, bzw. innerhalb des Auswertefensters, ein Minimum vorhanden ist. Anschließend wird, falls im ersten Schritt kein Minimum vorhanden festgestellt wurde, im zweiten Schritt das erste Minimum, also das Minimum an der niedrigsten Frequenzlage oberhalb der Referenzfrequenz, ermittelt. Dieses ist gemäß experimentellem Befund die Lambda-Dreiviertelresonanz.

In weiterer vorteilhafter Ausgestaltung des erfindungsgemäßen Verfahrens zum Betreiben einer Einrichtung schließt das Frequenzintervall den dreifachen Wert und/oder den fünffachen Wert der Lambdaviertelfrequenz ein. Mit Vorteil lässt sich auf diese Weise insbesondere eine Frequenzverschiebung von Amplitudenminima in diesem Frequenzbereich auswerten als Maß für die Eintauchtiefe des Sondenleiters bei eingetauchtem Sondenleiter, das heißt für den Fall, dass eine Schwellwertauswertung im Bereich der Lambdaviertelfrequenz zeigt, dass der Sondenleiter in das Medium eingetaucht ist.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Figur 1:: schematische Darstellung einer ersten Ausführungsform der Messeinrichtung in Verwendung an einem elektrisch leitenden Tank;
- Figur 2:: schematische Darstellung einer anderen Ausführungsform in Verwendung an einem elektrisch nicht leitenden Tank;
- Figur 3:: schematische Frequenzspektra zur Erläuterung des Verfahrens zum erfindungsgemäßen Betreiben der Messeinrichtungen gemäß Figur 1 und/oder Figur 2;
- Figur 4:: schematische Darstellung der Lage von Amplitudenminima als Funktion der Eintauchtiefe des Sondenleiters einer Messeinrichtung zur Veranschaulichung des erfindungsgemäßen Verfahrens zum Betreiben desselben;
- Figur 5:: schematische Schaltskizze (a) sowie zeitlicher Signalverlauf (b) zur Veranschaulichung einer bevorzugten Ausführungsform der Erfindung.

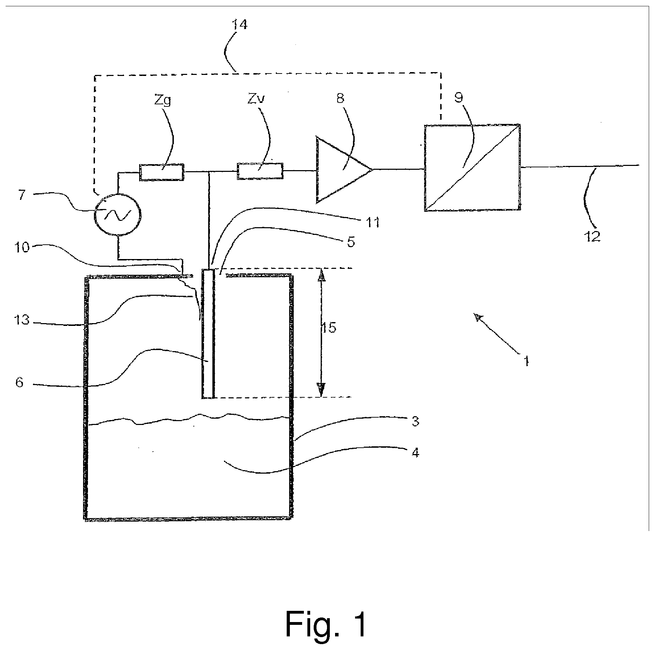

In Figur 1 ist schematisch eine Füllstandsmesseinrichtung 1 gezeigt, welche im Einsatz an einem Tank 2 ist. Der Tank 2 ist aus einem elektrisch leitenden Material gefertigt und ist bis zu einem Pegelstand 3 mit einem Medium 4 gefüllt. Das Medium 4 kann ein beliebiges insbesondere flüssiges, pastöses und/oder granuliert festes, Medium sein.

Der elektrisch leitende Tank 2 weist an der Oberseite eine Öffnung 5 auf. Durch die Öffnung 5 in dem elektrisch leitenden Tank 2 ist eine Sondenelektrode 6 derart in den elektrisch leitenden Tank 2 eingeführt, dass die Sondenelektrode 6 elektrisch isoliert von diesem ist. Die Füllstandsmesseinrichtung 1 besteht im Wesentlichen aus der auf die beschriebene Weise in den elektrisch leitenden Tank 2 eingeführten Sondenelektrode 6, einem Oszillator 7, einem Verstärker 8 sowie aus einer Auswerte- und Steuereinheit 9.

Der Oszillator 7 ist gemäß der Ausführung, welche in Figur 1 skizziert ist, mit einem Pol 10 an den elektrisch leitenden Tank 2 und mit dem anderen Pol 11 an die Sondenelektrode 6 angeschlossen. In der schematischen Darstellung gemäß Figur 1 sind die elektrischen Verhältnisse im Wesentlichen als Ersatzschaltbild gezeigt, wobei eine Innenimpedanz Zg des Oszillators 7 schematisch an dem Pol 11 gezeigt ist. Der Pol 11 entspricht dem Speisepunkt der Sondenelektrode 6. Die Auswerte- und Steuereinheit 9 ist über den Verstärker 8 und die schematisch in dem Ersatzschaltbild gezeigte Verstärker-Impedanz Zv mit dem Speisepunkt 11 der Sondenelektrode 6 verbunden. Ein Ausgangssignal 12 der Auswerte-und Steuereinheit 9 ist geeignet, um an eine Anzeigeeinheit zur Anzeige eines Pegelstandes geleitet zu werden.

In der schematischen Darstellung ist ferner eine Anhaftung 13 skizziert, welche eine Brücke bildet zwischen dem der Öffnung 5 des Tanks 2 zugewandten Ende der Sondenelektrode 6 und der Tankwandung 2. Experimentell zeigte sich, dass eine derartige Anhaftung 13 im Wesentlichen ohne Auswirkungen auf das Messergebnis ist, sodass der der Pegelstand 3 trotz der Anhaftung 13 zuverlässig ermittelt werden kann.

Die Auswerte- und Steuereinheit 9 ist ferner zur Ansteuerung des Oszillators 7 ausgebildet. Dies ist in der schematischen Darstellung durch eine gestrichelte Signallinie 14 angedeutet. Der Oszillator 7 ist mit Frequenzen kontinuierlich durchstimmbar betreibbar in einem Frequenzspektrum, welches mindestens bis zur Lambdaviertelfrequenz reicht. Die Sondenelektrode 6 hat eine Länge 15.

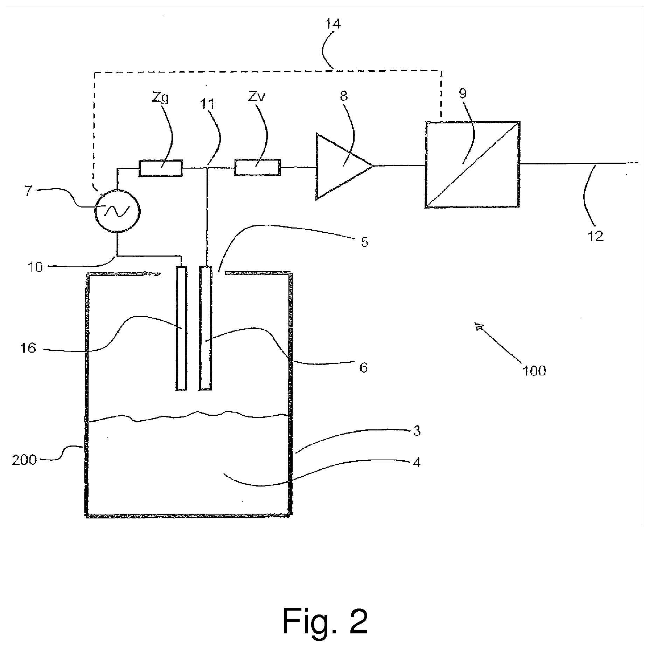

In der Figur 2 ist eine alternative Ausgestaltung einer Füllstandsmesseinrichtung 100 gezeigt. Die Füllstandsmesseinrichtung 100 ist im Wesentlichen gleichartig aufgebaut wie die Füllstandsmesseinrichtung 1 gemäß Figur 1. Die schematische Figur 2 zeigt die Füllstandsmesseinrichtung 100 im Einsatz an einem nicht elektrisch leitfähigen Tank 200.

Abweichend von der in Figur 1 gezeigten Füllstandsmesseinrichtung 1 weist die in Figur 2 gezeigte Füllstandsmesseinrichtung 100 eine Gegenelektrode 16 auf. Die Gegenelektrode 16 ist parallel zur Sondenelektrode 6 durch die Öffnung 5 in dem Tank 200 angebracht. Der Pol 10 des Oszillators 7 ist im Unterschied zu der in Figur 1 gezeigten Situation nicht mit dem Tank 200 sondern mit der Gegenelektrode 16 verbunden. Im Übrigen entsprechen die Komponenten und deren Anordnung zueinander im Zusammenhang mit Figur 1 erläuterten Füllstandsmesseinrichtung 1.

Zum Betreiben der Füllstandsmesseinrichtung 1 zur Durchführung von Messungen des Pegelstands 3 im Tank 2 gleichermaßen wie zum Betreiben der Füllstandsmesseinrichtung 100 zum Messen des Pegelstands 3 im nicht elektrisch leitfähigen Tank 200 wird jeweils das nachfolgend erläuterte Verfahren angewendet.

Mit Hilfe der Auswerte- und Steuereinheit 9 wird über die Steuersignalleitung 14 der Oszillator 7 angesteuert, um bei Frequenzen zwischen 0 und 500 MHz kontinuierlich durchzulaufen. Zu jeder Frequenz wird in der Auswerte- und Steuereinheit 9 die Schwingungsamplitude bestimmt und abgespeichert.

Das in dem Ausführungsbeispiel gewählte Frequenzintervall von 0 bis 500 MHz für den Frequenz-Sweep eignet sich erfindungsgemäß für eine Sondenelektrode 6 mit einer Länge 15 in der Größenordnung von 50 cm. Es hat sich gezeigt, dass die Wahl dieses Frequenzintervalls die erfindungsgemäße Pegelmessung mit Stablängen von lediglich bis zu etwa 20cm ermöglicht. Es ist aber im Rahmen der Erfindung gleichermaßen möglich, Stablängen von lediglich beispielsweise einigen Millimetern zu wählen, sofern das ausgewertete und erregte Frequenzintervall entsprechend erhöht wird.

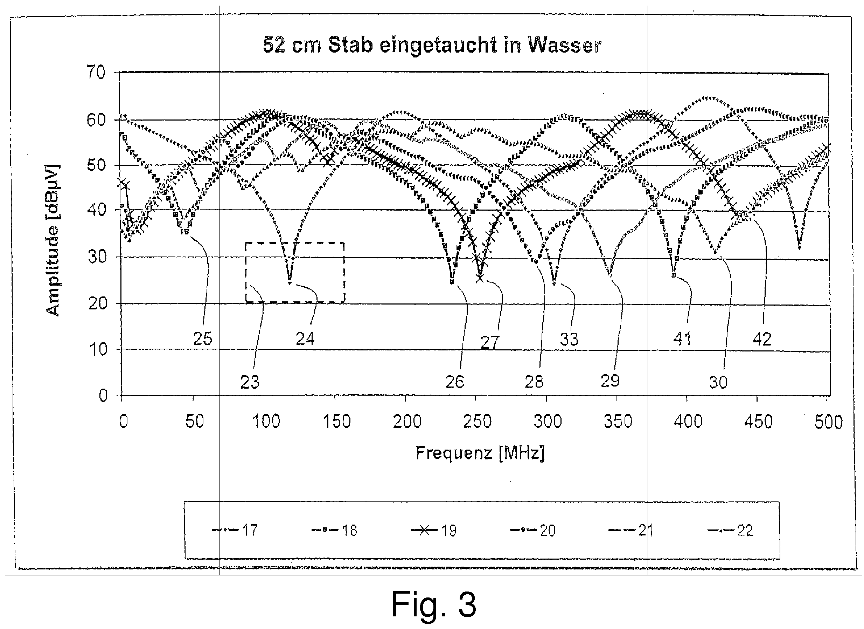

Danach ist in der Auswerte- und Steuereinheit 9 eines der in Figur 3 graphisch dargestellten Frequenzspektra abgelegt. In der graphischen Darstellung gemäß Figur 3 ist jeweils ein Frequenzspektrum, also eine gemessene Amplitude der Fußpunktimpedanz des Sondenleiters 6 dargestellt. Dabei zeigt Kurve 17 den Frequenzverlauf für eine nicht in das Medium 4 eingetauchte Sondenelektrode 6. Kurve 18 zeigt das Frequenzspektrum, welches man erhält, wenn das dem Speisepunkt 11 gegenüberliegende Ende der Sondenelektrode 6 sich auf Höhe des Pegelstands 3 befindet und somit das Medium 4 gerade berührt. Kurve 19 zeigt das Frequenzspektrum für den Fall, dass die Sondenelektrode 6 mit 20 % ihrer Länge 15 in das Medium 4 eingetaucht ist. Entsprechend zeigen die Kurven 20, 21, 22, die Frequenzspektra für Eintauchtiefen von 40 %, 60 % bzw. 80 % der Länge 15 der Gegenelektrode 16 in das Medium 4.

Die Figur 3 veranschaulicht weiter das zur Auswertung des Messergebnisses des Frequenz-Sweeps von 0 bis 500 MHz verwendete Bewertungsfenster 23. Wie zu erkennen, umschließt das Bewertungsfenster 23 einen Frequenzbereich von etwa 50 MHz um ein erstes Amplitudenminimum 24 des Frequenzspektrum 17 herum. In vertikaler Richtung umschließt das Bewertungsfenster 23 einen Amplitudenbereich, welcher den Amplitudenwert am Amplitudenminimum 24 der Trockenkurve 17 umschließt.

Um die Messeinrichtung gemäß einer der Figuren 1 oder 2 gemäß dem erfindungsgemäßen Verfahren als Grenzstandwächter zu verwenden, wird in regelmäßigen Abständen - oder auch kontinuierlich - ein Frequenz-Sweep mit dem Oszillator 7 durchgeführt, welcher mindestens die horizontale Ausdehnung des Bewertungsfensters 23 umschließt. Anschließend wird festgestellt, ob innerhalb des Bewertungsfensters 23 die Amplitude des Messsignals anliegt. Solange dies der Fall ist, wird daraus in der Auswerte- und Steuereinheit 9 geschlossen, dass der Pegelstand 3 sich unterhalb der Sondenelektrode 6 befindet, so dass die Sondenelektrode 6 das Medium 4 nicht berührt. Dementsprechend liegt die Frequenzkurve 17 vor.

Sobald die Sondenelektrode 6 das Medium 4 berührt, ergibt der Frequenz-Sweep die Kurve 18, welche insbesondere dadurch gekennzeichnet ist, dass deren erstes Amplitudenminimum 25 so stark gegenüber dem Amplitudenminimum 24 der Trockenkurve 17 verschoben ist, dass sie außerhalb des Bewertungsfensters 23 liegt. Hieraus wird in der Auswerte-und Steuereinheit 9 geschlossen, dass der Schwellpegel erreicht ist, und ein entsprechendes Ausgangssignal 12 wird generiert. Wie aus der Figur 3 ersichtlich, fallen die ersten Amplitudeminima der Frequenzspektren 19, 20, 21, 22, für sukzessive steigende Eintauchtiefen der Sondenelektrode 6 in das Medium 4 ebenfalls deutlich außerhalb des Bewertungsfensters 23. Das Amplitudenminimum 24 der Trockenkurve 17 fällt somit als einziges der Kurven 17, 18, 19, 20, 21, 22, in das Bewertungsfenster 23. Mit dem erfindungsgemäßen Verfahren lässt sich somit die Funktion eines Grenzstandswächters realisieren.

Ferner lässt sich mit dem erfindungsgemäßen Verfahren eine kontinuierliche Bestimmung des Pegelstandes 3 durchführen, unter der Voraussetzung, dass das dem Speisepunkt 11 gegenüberliegende Ende der Sondenelektrode 6 das Medium 4 zumindest berührt oder mit einem Teil seiner Länge 15 in dieses hineinragt. Sofern also innerhalb des Bewertungsfensters 23 kein Signal feststellbar ist, liefert eine Auswertung der zweiten Amplitudenminima der Kurven 18, 19, 20, 21, 22 ein Maß für den Grad der Eintauchtiefe der Sonde der Elektrode 6 in das Medium 4.

Dazu ist in der Figur 3 zu erkennen, dass gemäß experimenteller Beobachtung die zweiten Amplitudenminima 26, 27, 28, 29, 30 der Frequenzspektren 18, 19, 20, 21, 22 mit zunehmender Eintauchtiefe zu höheren Frequenzen verschoben sind. Eine Auswertung der Lage der zweiten Amplitudenminima 26, 27, 28, 29, 30 kann daher im Rahmen einer Kalibrierung mittels der Auswerte- und Steuereinheit 9 in ein den Pegelstand 3 angebendes Ausgangssignal 12 umgewandelt werden.

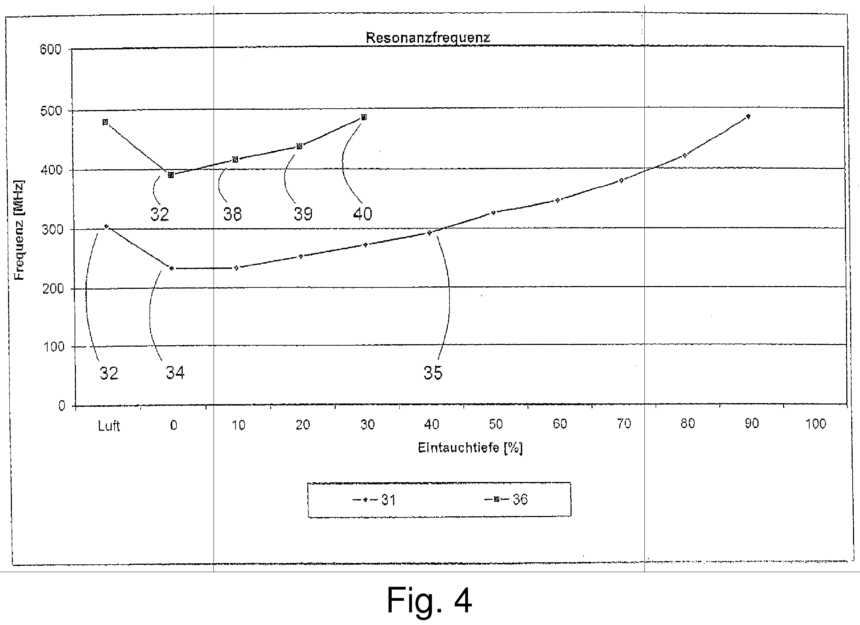

Zur Verdeutlichung des Wanderns der Lagen der zweiten Amplitudenminima dient Figur 4. In Figur 4 ist die Lage des zweiten Amplitudenminimums der Frequenzspektren 18, 19, 20, 21, 22 bei das Medium 4 berührender bzw. in das Medium 4 eingetauchter Sondenelektrode 6 als Funktion der Eintauchtiefe als Kurve 31 ausgetragen. Dabei entsprechen die Rautensymbole Messwerten, die Verbindungslinien betreffen lediglich die lineare Interpolation. Entsprechend entspricht Messpunkt 32 auf der Kurve 31 der Lage des zweiten Amplitudenminimums 33 - welches mit der 3/4 λ Resonanz assoziiert ist - der Trockenkurve 17 gemäß Figur 3.

Wie zu erkennen, tritt ein deutlicher Abfall der Frequenz in der Größenordnung von 100 MHz auf, wenn der Messpunkt 34 betrachtet wird, welcher zu dem zweiten Amplitudenminimum 26 der Figur 3 gehört, entsprechend einem ersten Berühren der Sondenelektrode 6 des Mediums 4. Im weiteren Verlauf der Kurve 31 ist ein im Wesentlichen kontinuierlicher Anstieg der Frequenz mit zunehmender Eintauchtiefe der Sondenelektrode 6 in das Medium 4 zu erkennen.

In etwa bei dem Messpunkt 35, entsprechend dem Amplitudenminimum 28 der Kurve 20 bei 40 % Eintauchtiefe entspricht die Frequenzlage des Amplitudenminimums in etwa jener des Messpunkts 32, entsprechend dem zweiten Amplitudenminimum 33 der Trockenkurve 17 gemäß Figur 3.

Um an diesem Messpunkt eine Auswertung der kontinuierlichen Füllstandshöhe in eindeutiger Weise durchführen zu können, wird stets als zusätzliches Kriterium eine Auswertung des Bewertungsfensters 23 vorgenommen, sodass Verwechslungen zwischen dem Messpunkt 32 und dem Messpunkt 35 ausgeschlossen sind, da der Messpunkt 32 nicht auftreten kann, wenn in dem Bewertungsfenster 23 kein Signal anliegt.

Wie in Figur 4 ferner anhand der Kurve 36 veranschaulicht, kann in analoger Weise auch die Auswertung der Lageverschiebung des dritten Amplitudenminimums jeder der Kurven 18, 19, 20, 21, 22, vorgenommen werden. Die Kurvenpunkte 37, 38, 39, 40, entsprechen dabei den dritten Amplitudenminima - welche mit den 5/4 λ Resonanzen assoziiert sind - der entsprechenden Kurven gemäß Figur 3.

Wie in Figur 3 zu erkennen, ist ein Überlapp der Lagen der zweiten Amplitudenminima von Kurven mit hoher Eintauchtiefe mit den Lagen der dritten Amplitudenminima von Kurven mit niedrigeren Eintauchtiefen zu beobachten. Eine Unterscheidung der zweiten und dritten Amplitudenminima im Sinne einer eindeutigen Zuordnung einer Lage eines Amplitudenminimums zu einer Eintauchtiefe ist möglich, wenn zusätzlich die Güte der Amplitudenminima ermittelt und ausgewertet wird. Denn Figur 3 lässt den experimentellen Befund erkennen, dass sich die Güte der dritten Amplitudenminima in signifikanter Weise von der Güte der zweiten Amplitudenminima unterscheidet. Unter dem Begriff wird im Rahmen der vorliegenden Anmeldung sowohl die Ausprägung des Minimums hinsichtlich der Amplitude als auch die Breite des Minimums verstanden. Die Auswertung der Güte erlaubt im Rahmen der Erfindung im übrigen auch die Identifizierung von Minima als Voraussetzung für die weitere Auswertung.

Auf diese Weise ist sowohl eine Grenzstandüberwachung als auch eine kontinuierliche Pegelmessung anhand des erfindungsgemäßen Verfahrens unter Einsatz der erfindungsgemäßen Einrichtung vorgeschlagen.

Zum Kalibrieren der Einrichtung wird ein Frequenz-Sweep durchgeführt, und es werden die Lagen der Amplitudenminima im Trockenfall ermittelt, um das für die Auswertung wichtige Bewertungsfenster 23 festzulegen. Eine derartige Kalibrierung ist jederzeit einfach durchführbar und erfordert insbesondere keine Eingriffe an dem aparativen Aufbau. Eine Kalibrierung wird immer dann erforderlich sein, wenn die Messeinrichtung mit einer Sondenelektrode 6 mit einer anderen Länge 15 eingesetzt werden soll. Mit Vorteil wird eine Kalibrierung hingegen nicht erforderlich sein, wenn Änderungen des zu messenden Mediums 4 erfolgen, denn die experimentell ermittelte Abhängigkeit der Messgrößen von der Eintauchtiefe bzw. von der Frage, ob die Sondenelektrode 6 das Medium 4 berührt, hat sich als medienunabhängig erwiesen.

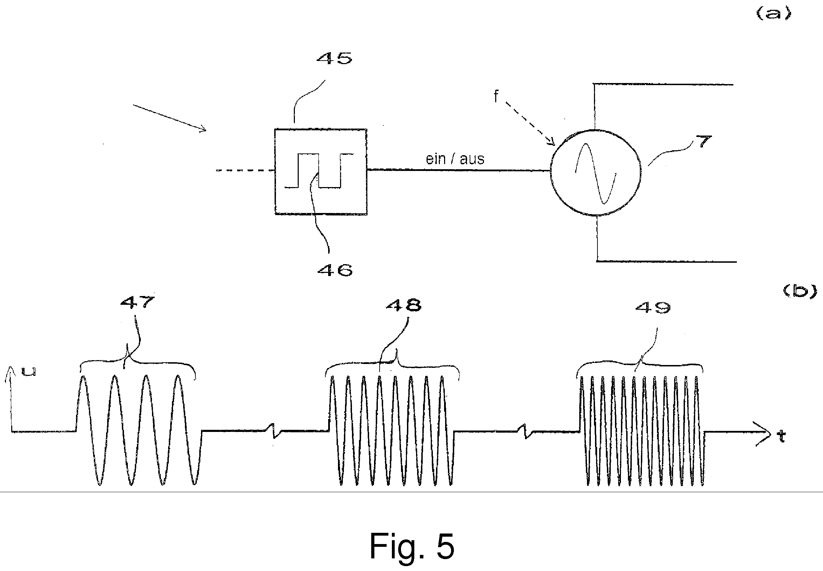

Die Figur 5 veranschaulicht ein bevorzugtes Ausführungsbeispiel eines erfindungsgemäßen Verfahrens zum Erkennen eines Pegelstands. Wie in Figur 5a anhand eines schematischen Schaltplans veranschaulicht, ist gemäß dieser Ausgestaltung der Erfindung dem Oszillator 7 ein Pulsgenerator 45 zugeordnet, welcher den Oszillator 7 zeitlich gepulst ein- bzw. ausschaltet. Dazu gibt der Pulsgenerator 45 im Prinzip Rechteckpulse 46, welche zwischen logisch 1 und logisch 0 variieren, an den Oszillator 7 weiter. Der Oszillator 7 kann gemäß einer der in den Figuren 1 und 2 gezeigten Konfigurationen in den Schaltkreis eingebunden sein. Wie in Figur 5a mit fangedeutet, ist der Oszillator 7 mit variabler Frequenz betreibbar.

Gemäß einem bevorzugten Ausführungsbeispiel eines erfindungsgemäßen Verfahrens wird nun anhand des Pulsgenerators 45 ein Rechtecksignal mit Rechteckpulsen 46 erzeugt, mit welchem der Oszillator 7 gepulst ein- bzw. ausgeschaltet wird. Die Breite der Rechteckpulse 46 ist so gewählt, dass sie mehrere Schwingungsperioden bei der jeweiligen Frequenz f umfasst.

Um mit diesem Verfahren ein Frequenzspektrum in diskreten Frequenzschritten abzutasten, wird erfindungsgemäß die Frequenz f des Oszillators 7 von Rechteckpuls 46 zu Rechteckpuls 46 variiert. Dabei wird die Frequenz f jedoch jeweils für die Zeitdauer des Rechteckpulses 46 konstant gehalten. Das bei der beschriebenen Betriebsweise vom Oszillator 7 abgegebene Signal sieht dabei im Prinzip so wie in Figur 5b schematisch gezeigt aus. Figur 5b zeigt den Graphen des zeitlichen Verlauf der vom Oszillator 7 abgegebenen Spannung. Wie zu erkennen, besteht das Signal aus sogenannten Bursts 47, 48, 49. Die Frequenz f innerhalb jedes Bursts 47, 48, 49 ist konstant. Jedoch unterscheidet sich die Frequenz innerhalb des Bursts 47 von jener innerhalb des Bursts 48, welche sich wiederum von jener innerhalb des Bursts 49 unterscheidet.

### BEZUGSZEICHENLISTE

- 1: Füllstandsmesseinrichtung
- 2: elektrisch leitender Tank
- 3: Pegelstand
- 4: Medium
- 5: Öffnung
- 6: Sondenelektrode
- 7: Oszillator
- 8: Verstärker
- 9: Auswerte- und Steuereinheit
- 10: Pol
- 11: Pol/Speisepunkt
- Zg: Innenimpedanz
- Zv: Verstärker-Innenimpedanz
- 12: Ausgangssignal
- 13: Anhaftung
- 14: Steuersignal
- 15: Länge
- 16: Gegenelektrode
- 100: FüllstandsMesseinrichtung
- 200: elektrisch nicht leitender Tank
- 17: Frequenzspektrum für nicht eingetauchte Sondenelektrode / Trockenspektrum
- 18: Frequenzspektrum für Sondenelektrode, die Medium 4 gerade berührt
- 19: Frequenzspektrum für 20% in das Medium eingetauchte Sondenelektrode
- 20: Frequenzspektrum für 40% in das Medium eingetauchte Sondenelektrode
- 21: Frequenzspektrum für 60% in das Medium eingetauchte Sondenelektrode
- 22: Frequenzspektrum für 80% in das Medium eingetauchte Sondenelektrode
- 23: Bewertungsfenster
- 24: erstes Amplitudenminimum, trocken
- 25: erstes Amplitudenminimum, 0%
- 26: zweites Amplitudenminimum, 0%
- 27: zweites Amplitudenminimum, 20%
- 28: zweites Amplitudenminimum, 40%
- 29: zweites Amplitudenminimum, 60%
- 30: zweites Amplitudenminimum, 80%
- 31: Lage des zweiten Amplitudenminimums gegen Eintauchtiefe
- 32: Messpunkt
- 33: zweites Amplitudenminimum, Trockenfall
- 34: Messpunkt
- 35: Messpunkt
- 36: Lage des dritten Amplitudenminimums gegen Eintauchtiefe
- 37: Messpunkt
- 38: Messpunkt
- 39: Messpunkt
- 40: Messpunkt
- 41: drittes Amplitudenminimum, 0%
- 42: drittes Amplitudenminimum, 20%
- 43: drittes Amplitudenminimum, 40%
- 44: drittes Amplitudenminimum, 60%
- 45: Pulsgenerator
- 46: Rechteckpuls
- 47: Burst
- 48: Burst
- 49: Burst

## Patentansprüche

1. Verfahren zum Betreiben einer Einrichtung (1) zum Erkennen eines Pegelstands (3) von Medien (4) in einem Tank (2, 200) mit einem im Wesentlichen vertikal in den Tank (2, 200) hineinragend, von diesem elektrisch isoliert anbringbaren länglichen elektrischen Sondenleiter (6), einem elektrischen zeitlich variablen Oszillator (7) mit einer Innenimpedanz (Zg) zum Anschließen an einen Speisepunkt (11) des Sondenleiters (6), um an diesen eine zeitlich variable Spannung anzulegen, wobei der Speisepunkt (11) an einem tankseitigen Ende des Sondenleiters (6) angeordnet ist, und einer Auswerte- und Steuereinheit (9) zum Auswerten einer elektrischen Größe des Sondenleiters (6), wobei die Auswerte- und Steuereinheit (9) zur Messung einer Fußpunktimpedanz des Sondenleiters (6) am Speisepunkt (11) ausgebildet ist, wobei zur Messung der Fußpunktimpedanz eine Schwingungsamplitude bei mindestens einer Frequenz gemessen wird, um den Pegelstand (3) zu bestimmen, wobei der Oszillator (7) nacheinander bei unterschiedlichen Frequenzen im Sinne eines Frequenz-Sweeps, betrieben wird, wobei die Schwingungsamplitude gemessen und aufgezeichnet wird, wobei in einem derart aufgezeichneten Frequenzspektrum (17, 18, 19, 20, 21, 22) eine Frequenzlage mindestens eines Amplitudenminimums (24, 25, 26, 27, 28, 29, 30, 41, 42) bestimmt wird, **dadurch gekennzeichnet, dass** das Verfahren die Einrichtung als Grenzstandswächter verwendet, indem geprüft wird, ob das Amplitudenminimum (24) des gemessenen Frequenzspektrums innerhalb eines Bewertungsfensters (23) liegt, das einen Frequenzbereich von etwa 50 MHz um das entsprechende Amplitudenminium (24) des Frequenzspektrums (17), das die Trockenkurve darstellt, herum umschließt, wobei die Trockenkurve das Frequenzspektrum für einen nicht in das Medium eingetrauchten Sondenleiter darstellt, und solange dies der Fall ist, daraus in der Auswerte- und Steuereinheit (9) geschlossen wird, dass der Pegelstand (3) sich unterhalb des Sondenleiters (6) befindet und das Verfahren die Einrichtung zur kontinuierlichen Bestimmung des Pegelstandes (3) verwendet, sobald das dem Speisepunkt (11) gegenüberliegende Ende der Sondenelektrode (6) das Medium (4) zumindest berührt, oder mit einem Teil seiner Länge in dieses hineinragt, indem die Frequenzlage des zweiten Amplitudenminimums (26, 27, 28, 29, 30) des gemessenen Frequenzspektrums (18, 19, 20, 21 22) ausgewertet wird und ein Maß für den Grad der Eintauchtiefe der Sondenelektrode (6) liefert, indem das zweite Amplitudenminimum (26, 27, 28, 29, 30) mit zunehmender Eintauchtiefe zu höheren Frequenzen verschoben ist und die Frequenzlage des dritten Amplitudenminimums des gemessenen Frequenzspektrums (18, 19, 20, 21 22) ausgewertet wird, wobei ihre Lageverschiebung in analoger Weise von der Eintauchtiefe abhängt, wobei eine Unterscheidung der zweiten und dritten Amplitudenminima im Sinne einer eindeutigen Zuordnung einer Lage eines Amplitudenmimimums zu einer Eintauchtiefe erfolgt, indem zusätzlich die Güte der Amplitudenminima ermittelt und ausgewertet wird und wobei stets als zusätzliches Kriterium zur kontinuierlichen Bestimmung des Pegelstandes herangezogen wird, dass in dem Bewertungsfenster (23) kein Signal anliegt.

2. Verfahren nach Anspruch 1,**dadurch gekennzeichnet, dass** mittels des Oszillators (7) Anregungspulse erzeugt werden, wobei die Anregungspulse mindestens eine innerhalb eines der Größenordnung des Kehrwertes einer größten auszuwertenden Frequenz entsprechenden Zeitintervalls auf einen Maximalwert ansteigende Flanke aufweisen.

3. Verfahren nach Anspruch 1 oder 2, **dadurch gekennzeichnet, dass** die Schwingungsamplitude bei einer Referenzfrequenz gemessen wird, wobei bei Überschreiten eines vorgewählten Schwellwerts der Schwingungsamplitude ein Signal erzeugt wird.

4. Verfahren nach Anspruch 3, **dadurch gekennzeichnet, dass** die Referenzfrequenz die λ/4-Frequenz oder ein ungerades ganzzahliges Vielfaches der λ/4-Frequenz ist.

5. Verfahren nach Anspruch 3, **dadurch gekennzeichnet, dass** die Referenzfrequenz das Zweifache der λ/4-Frequenz oder ein gerades ganzzahliges Vielfaches der λ/4-Frequenz ist.

6. Verfahren nach einem der Ansprüche 1 bis 5, **dadurch gekennzeichnet, dass** ein durch die unterschiedlichen Frequenzen gebildetes Frequenzintervall den dreifachen Wert und/oder den fünffachen Wert der λ/4-Frequenz einschließt.

## Claims

1. A method of operating a device (1) for detecting a level (3) of media (4) in a tank (2, 200), with an elongated electrical probe conductor (6) projecting essentially vertically into the tank (2, 200) and mountable such that said conductor is electrically insulated therefrom, a electrical time-variable oscillator (7) having an internal impedance (Zg) for connection to a feed point (11) of the probe conductor (6) in order to apply a time-variable voltage thereto, wherein the feed point (11) is arranged on a tank end of the probe conductor (6), and an evaluation and control unit (9) for evaluating an electrical variable of the probe conductor (6), wherein the evaluation and control unit (9) is designed for measuring a basepoint impedance of the probe conductor (6) at the feed point (11), wherein for measuring the basepoint impedance an oscillation amplitude is measured at at least one frequency in order to determine the level (3), wherein the oscillator (7) is operated consecutively at different frequencies in the form of a frequency sweep, wherein the oscillation amplitude is measured and recorded, wherein in such a recorded frequency spectrum (17, 18, 19, 20, 21, 22) a frequency position of at least one amplitude minimum (24, 25, 26, 27, 28, 29, 30, 41, 42) is determined, **characterised in that** the method uses the device as a limit level monitor, **in that** it is checked whether the amplitude minimum (24) of the measured frequency spectrum is within an evaluation window (23), which encompasses a frequency spectrum of around 50 MHz around the corresponding amplitude minimum (24) of the frequency spectrum (17), which constitutes the dry curve, wherein dry curve shows the frequency spectrum of a probe conductor not immersed in the medium, and as long as this is the case, it is concluded in the evaluation and control unit (9) that the level (3) is below the probe conductor (6) and the method uses the device for continuous determination of the level (3) as soon as the end of the probe electrode (6) opposite the feed point (11) at least comes into contact with, or with part of its length projects into, the medium (4), **in that** the frequency position of the second amplitude minimum (26, 27, 28, 29, 30) of the measured frequency spectrum (18, 19, 20, 21, 22) is measured and provides a measure of the degree of immersion depth of the probe conductor (6) **in that** the second amplitude minimum (26, 27, 28, 29, 30) is displaced to higher frequencies with increasing immersion depth and the frequency position of the third amplitude minimum of the measured frequency spectrum (18, 19, 20, 21, 22) is evaluated, wherein in an analogue manner its position displacement depends on the immersion depth, wherein differentiation of the second and third amplitude minima takes place in the sense of a clear assignment of a position of an amplitude minimum to an immersion depth **in that** the quality of the amplitude minima is also determined and evaluated, and wherein the fact that there is no signal in the evaluation window (23) is always used as an additional criterion for the continuous determination of the level.

2. The method according to claim 1, **characterised in that** by means of the oscillator (7) stimulation pulses are generated, wherein within an order of magnitude of the reciprocal value of a time interval corresponding to a largest frequency to be evaluated the stimulation pulses have at least one flank increasing to a maximum value.

3. The method of claims 1 or 2, **characterised in that** the oscillation amplitude at a reference frequency is measured, wherein on exceeding a preselected threshold value of the oscillation amplitude a signal is generated.

4. The method according to claim 3, **characterised in that** the reference frequency is the λ/4 frequency or an odd-numbered whole number multiple of the λ/4 frequency.

5. The method according to claim 3, **characterised in that** the reference value is twice the λ/4 frequency or an even-numbered whole number multiple of the λ/4 frequency.

6. The method according to any one of claims 1 to 5, **characterised in that** a frequency interval formed by the different frequencies includes the threefold value and/or the five-fold value of the λ/4 frequency.

## Revendications

1. Procédé destiné à exploiter un système (1) de détection d'un niveau (3) de milieux (4) dans un réservoir (2, 200), avec un conducteur-sonde (6) électrique allongé, saillant sensiblement à la verticale dans le réservoir (2, 200), susceptible d'être monté en étant électriquement isolé par rapport à celui-ci, un oscillateur (7) électrique variable dans le temps avec une impédance interne (Zg), destiné à être raccordé sur un point d'alimentation (11) du conducteur-sonde (6), pour appliquer sur ce dernier une tension variable dans le temps, le point d'alimentation (11) étant placé sur une extrémité côté réservoir du conducteur-sonde (6) et avec une unité d'évaluation et de commande (9), destinée à évaluer une dimension électrique du conducteur-sonde (6), l'unité d'évaluation et de commande (9) étant conçue pour mesurer une impédance au point bas du conducteur-sonde (6), au point d'alimentation (11), pour mesurer l'impédance au point bas, une amplitude oscillatoire étant mesurée à au moins une fréquence, pour déterminer le niveau (3), l'oscillateur (7) étant exploité successivement à différentes fréquences dans le sens d'un balayage de fréquence, l'amplitude oscillatoire étant mesurée et enregistrée, dans un spectre de fréquences (17, 18, 19, 20, 21, 22) ainsi enregistré, une position de fréquence d'un minimum d'amplitude (24, 25, 26, 27, 28, 29, 30, 41, 42) étant déterminée, **caractérisé en ce que** le procédé utilise le système en tant que contrôleur de niveau limite, **en ce qu'**il est vérifié si le minimum d'amplitude (24) du spectre de fréquences mesuré se situe dans une fenêtre d'évaluation (23) qui renferme une gamme de fréquences d'environ 50 MHz autour du minimum d'amplitude (24) correspondant du spectre de fréquences (17), qui représente la courbe sèche, la courbe sèche représentant le spectre de fréquences pour un conducteur-sonde qui n'est pas immergé dans le milieu et aussi longtemps que c'est le cas, il en est conclu dans l'unité d'évaluation et de commande (9) que le niveau (3) se trouve en-dessous du conducteur-sonde (6) et **en ce que** le procédé utilise le système pour une détermination continue du niveau (3), dès que l'extrémité de l'électrode de sonde (6) qui est opposée au point d'alimentation (11) entre pour le moins en contact avec le milieu (4) ou par une partie de sa longueur saillit dans celui-ci **en ce que** la position de fréquence du deuxième minimum d'amplitude (26, 27, 28, 29, 30) du spectre de fréquences (18, 19, 20, 21, 22) mesuré est évaluée et fournit une dimension pour le taux de profondeur d'immersion de l'électrode de sonde (6), **en ce que** le deuxième minimum d'amplitude (26, 27, 28, 29, 30) se déplace vers des fréquences plus élevées au fur et à mesure de l'accroissement de la profondeur d'immersion et la position de fréquence du troisième minimum d'amplitude du spectre de fréquences (18, 19, 20, 21, 22) est évalué, son déplacement de position dépendant de manière analogue de la profondeur d'immersion, une différenciation des deuxième et troisième minimums d'amplitude s'effectuant dans le sens d'une association claire d'une position d'un minimum d'amplitude avec une profondeur d'immersion, **en ce qu'**en supplément la qualité du minimum d'amplitude est déterminée et évaluée et sachant qu'il est toujours fait recours en tant que critère supplémentaire pour la détermination continue du niveau à la circonstance qu'aucun signal n'est appliqué dans la fenêtre d'évaluation (23).

2. Procédé selon la revendication 1, **caractérisé en ce qu'**à l'aide de l'oscillateur (7), des impulsions d'excitation sont créées, les impulsions d'excitation présentant au moins un flanc croissant à une valeur maximale dans un intervalle de temps correspondant à un ordre de grandeurs de la valeur réciproque d'une fréquence la plus élevée à évaluer.

3. Procédé selon la revendication 1 ou la revendication 2, **caractérisé en ce que** l'amplitude oscillatoire est mesurée à une fréquence de référence, lors d'un dépassement d'une valeur seuil présélectionnée pour l'amplitude oscillatoire, un signal étant généré.

4. Procédé selon la revendication 3, **caractérisé en ce que** la fréquence de référence est la fréquence λ/4 ou un multiple entier impair de la fréquence λ/4.

5. Procédé selon la revendication 3, **caractérisé en ce que** la fréquence de référence est le double de la fréquence λ/4 ou un multiple entier pair de la fréquence λ/4.

6. Procédé selon l'une quelconque des revendications 1 à 5, **caractérisé en ce qu'**un intervalle de fréquences formé par les différentes fréquences inclut la valeur triple et/ou la valeur quintuple de la fréquence λ/4.
